# EUROPÄISCHE PATENTSCHRIFT

(11) **EP 1 994 690 B1**
(45) Veröffentlichungstag und Bekanntmachung des Hinweises auf die Patenterteilung: **28.10.2009**
(21) Anmeldenummer: 07711762.0
(22) Anmeldetag: 03.03.2007
(51) Int. Cl.: H04L 12/40

(54) **DATENÜBERTRAGUNGS- UND -VERARBEITUNGSSYSTEM MIT SICHEREM ERFASSEN VON KRITISCHEN ZUSTÄNDEN**
DATA TRANSMISSION AND PROCESSING SYSTEM FEATURING SECURE DETECTION OF CRITICAL STATES
SYSTÈME DE TRANSMISSION ET DE TRAITEMENT DE DONNÉES À DÉTECTION SÉCURISÉE D'ÉTATS CRITIQUES

(30) Priorität: 15.03.2006 DE 102006012275
(43) Veröffentlichungstag der Anmeldung: 26.11.2008
(73) Patentinhaber: Phoenix Contact GmbH & Co. KG, 32825 Blomberg (DE)
(72) Erfinder: OSTER, Viktor, 32825 Blomberg (DE); SCHMIDT, Joachim, 31812 Bad Pyrmont (DE); HORN, Steffen, 32825 Blomberg (DE)
(74) Vertreter: Herden, Andreas F.
(86) Internationale Anmeldenummer: PCT/EP2007/001837
(87) Internationale Veröffentlichungsnummer: WO 2007/104440

(56) Entgegenhaltungen:
- WO-A-01/50677
- US-A- 5 784 547
- US-A1- 2003 135 686

## Beschreibung

Die Erfindung bezieht sich auf ein Datenübertragungs- und -verarbeitungssystem, das mindestens einen Eingangsteilnehmer, eine Steuereinheit zum Empfang und zur Verarbeitung von Daten und eine Übertragungseinrichtung für Daten zwischen dem Eingangsteilnehmer und der Steuereinheit umfasst. Der Eingangsteilnehmer bildet zyklisch Datenwerte, die zur Steuereinheit übertragen werden, um dort als Ausgangsdatenwerte an einen Ausgangsteilnehmer übertragen zu werden. Die Erfindung bezieht sich auch auf ein Verfahren zur Sicherung der Verarbeitung von kritischen Zuständen.

Bei Prozesssteuerungen gibt es eine zentrale Steuereinheit und eine Mehrzahl von dezentralen Feldgeräten, die über ein Bussystem miteinander verbunden sind. Bei den Feldgeräten kann man zwischen Eingangs-Feldgeräten, die beispielsweise Messwerte aufsammeln, und Ausgangs-Messgeräten, die beispielsweise Aktorsteuersignale ausgeben, unterscheiden. Das Eingangs-Feldgerät kann so aufgebaut sein, dass es zyklisch Datenwerte empfängt und diese Empfangsdaten der Steuereinheit über ein Bussystem anbietet. Wenn die Anzahl der Busteilnehmer sehr groß ist, kommt ein einzelnes Eingangs-Feldgerät als Busteilnehmer nur für eine kurze Zykluszeit dazu, die bereit gestellten Daten zu der Steuereinheit zu übertragen. Falls sich die Eingangsdaten des Feldgeräts schneller ändern, als das Bussystem diese Datenwerte abholen kann, kommt es zum Datenverlust. Das Gleiche gilt, wenn die Eingangsdaten nur für kurze Zeit an einem zu langsamen Bussystem anliegen. Diese Probleme mit dem Datenverlust sind beispielsweise auch in WO-A2-01/50677 anzutreffen.

Bei der Prozesssteuerung kann es darauf ankommen, Messwerte, die einen Prozesszustand beschreiben, schnell und genau zu erfassen. Insbesondere in der Sicherheitstechnik darf es nicht vorkommen, dass ein gemessener Zustand, der eine Sicherheitsanforderung notwendig macht, verloren geht. Aber auch in der Standardtechnik kann es Eingangsinformationen geben, die zwar nur für eine kurze Zeit anliegen, aber unbedingt in der Steuerung verarbeitet werden müssen. In solchen Fällen werden erhöhte Anforderungen an das Übertragungssystem gestellt, d. h. es müssen Bussysteme mit erhöhter Übertragungsgeschwindigkeit benutzt werden, oder aber die Anzahl der Busteilnehmer muss reduziert werden. Auch kann es erforderlich sein, schnellere Steuerungssysteme einzusetzen.

Der Erfindung liegt die Aufgabe zugrunde, ein Datenübertragungs- und -verarbeitungssystem mit mindestens einem Eingangsteilnehmer oder Feldgerät, einer Steuereinheit und einer Übertragungseinrichtung zu schaffen, bei dem kritische Datenwerte, die kritische Zustände beim Feldgerät betreffen, mit großer Sicherheit zur Steuereinheit übertragen werden.

Die gestellte Aufgabe wird durch die Merkmale und Maßnahmen, wie in den Ansprüchen angegeben, gelöst.

Im Einzelnen umfasst das Datenübertragungs- und -verarbeitungssystem außer dem mindestens einen Eingangsteilnehmer oder Feldgerät, der Steuereinheit und der Übertragungseinrichtung noch eine Parametrierungseinrichtung, die bei dem mindestens einen Eingangsteilnehmer oder Feldgerät wirksam ist, um gewisse Datenwerte als kritische Zustände zu markieren. Wenn solche kritischen Zustände auftreten und von dem Eingangsteilnehmer oder Feldgerät als kritische Datenwerte festgestellt werden, dann werden solche kritische Datenwerte so lange zur Übertragung bereit gestellt, bis sicher gestellt ist, dass diese kritischen Datenwerte an die Steuerung übertragen worden sind. Dies kann auf unterschiedliche Weise erfolgen. Die Steuerung kann durch ein Quittierungssignal die erfolgte Datenübertragung bestätigen. Möglich ist auch, ohne Quittungssignal auszukommen, wenn die Übertragungseinrichtung (zumeist ein Bussystem) auf eine Sicherheitsanforderung hin die Bereitstellungszeit der Daten bei dem sicheren Eingabegerät verlängert. Die Maßnahmen, die zwischen Eingangsteilnehmer und Steuereinheit getroffen werden, können auch zwischen Steuereinheit und Ausgangsteilchen entsprechend angewendet werden.

Ein Ausführungsbeispiel der Erfindung wird anhand der Zeichnung beschrieben. Dabei zeigt:
- Fig. 1: ein Strukturbild eines Datenübertragungs- und Verarbeitungssystems,
- Fig. 2: ein erstes Betriebsschema und
- Fig. 3: ein zweites Betriebsschema.

Das Datenübertragungs- und Verarbeitungssystem umfasst eine Reihe von Feldgeräten, von denen ein Eingangsfeldgerät als Eingangsteilnehmer 1 und ein Ausgangsfeldgerät als Ausgangsteilnehmer 2 dargestellt sind. Ein Bus 3 bildet eine Datenübertragungseinrichtung zwischen den Feldgeräten und einer Steuereinheit 4. Ferner sind noch Parametrierungsmittel 5 vorgesehen, welche Parameterwerte bei der Verarbeitung von Daten in dem Feldgerät 1 und der Steuereinheit 4 bereit stellen.

Das Feldgerät 1 weist einen Eingangsspeicher 11, eine Verarbeitungslogik 12 und eine Slave-Anschaltung 13 auf. Ferner ist ein Speicher 15 für spezielle Parametrierungsdaten vorgesehen. Der Eingangsspeicher 11 ist dafür vorgesehen, Eingangsdaten Z₀, Z₁ bis Zₓ zyklisch einzulesen, wobei die Eingangsdaten zu überwachende Zustände abbilden. Die Eingangsdaten werden in einer Verarbeitungslogik 12 bearbeitet und dabei mit Parameterdatensätzen des Speichers 15 verglichen. Die so bearbeiteten Eingangsdaten werden der Slave-Anschaltung 13 übergeben und zur Übertragung durch die Übertragungseinrichtung 3 bereit gestellt.

Der Ausdruck "Speicher für Paramtrierungsdaten" ist ganz allgemein zu verstehen und umfasst nicht nur "Software" für programmierbare Speicher, sondern auch "Firmware", die auch in der Verarbeitungslogik 12 mit einbezogen sein kann. Dabei könnten die Eingangsdaten Z₀, Z₁ ... Zₓ in digitaler Form vorliegen und die kritischen Daten, welche die kritischen Zustände betreffen, könnten ein spezifisches Adressenfeld, z. B. mit einer Null, aufweisen.

Die Steuereinheit 4 umfasst eine Master-Anschaltung 41, eine Verarbeitungslogik 42 und einen Speicher 45 für Parametrierungsdaten. Die Master-Anschaltung 41 ist mit der Slave-Anschaltung 13 über die Übertragungseinrichtung 3 verbunden und empfängt Datenwerte der Eingangsdaten Z₀ bis Zₓ. Die Datenwerte werden in der Verarbeitungslogik 42 zu Steuerbefehlen verarbeitet, die als Ausgangsdaten A₀, A₁ ... Aₓ bezeichnet werden, und über die Übertragungseinrichtung 3 dem Feldgerät 2 zugeführt werden.

Das Ausgangsfeldgerät 2 ist symmetrisch zum Eingangsfeldgerät 1 aufgebaut und umfasst einen Ausgangsspeicher 21, eine Verarbeitungslogik 22 und eine Slave-Anschaltung 23. Wie ersichtlich, ist die Datenflussrichtung im Feldgerät 2 umgekehrt zu der im Feldgerät 1.

Eingangsfeldgerät 1 und Ausgangsfeldgerät 2 können unter gemeinsamer Nutzung der Slave-Anschaltung 13/23 und der Verarbeitungslogik 12/22 in einem Feldgerät 1/2 miteinander kombiniert sein, wobei lediglich die Eingangsschaltungen 11 und die Ausgangsschaltungen 21 voneinander getrennt sind, um entsprechend ihrer Funktion angesteuert zu werden.

Die Parametrierungseinrichtung besitzt einen zentralen Speicher für alle Parametrierungsdaten, und es sei angenommen, dass der Speicher 45 der Steuereinheit 4 als dieser zentraler Speicher genutzt wird. Von dem zentralen Speicher aus werden spezielle Parametrierungsdaten den einzelnen Eingangsfeldgeräten zugeführt und abgespeichert, um beim Betrieb des Datenübertragungs- und -verarbeitungssystems genutzt zu werden. Die Parametrierungsdaten können als Bitkombinationen gespeichert sein.

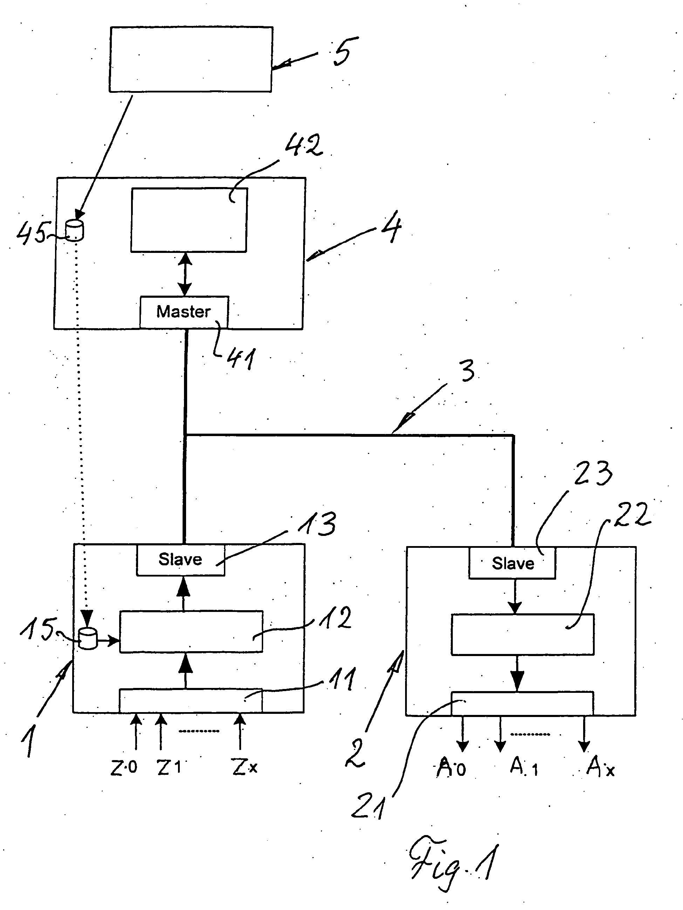

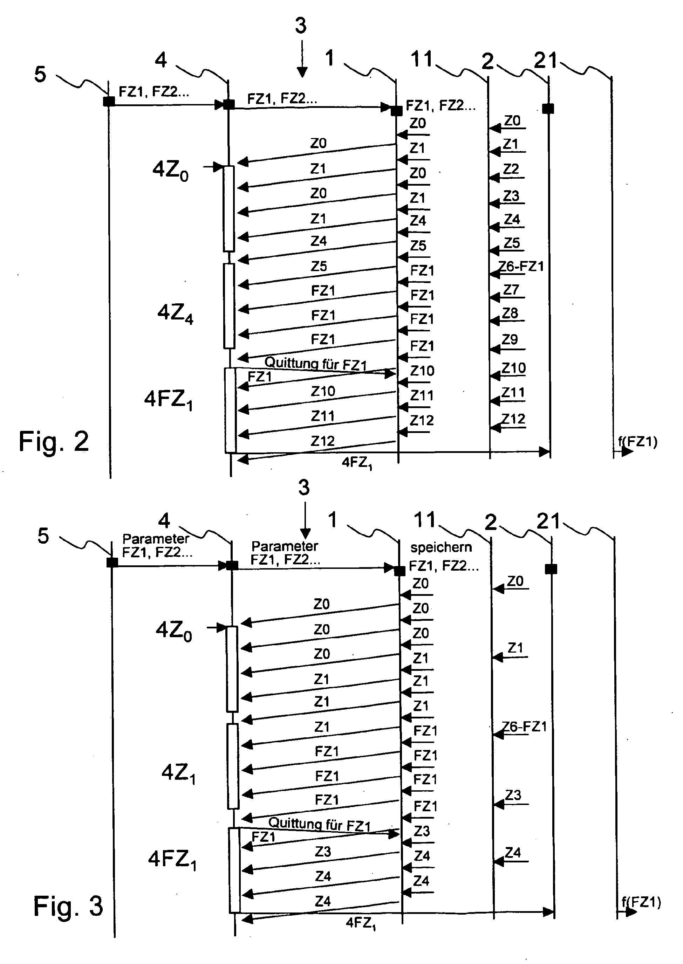

Der Betriebsablauf des Datenübertragungs- und -bearbeitungssystems wird anhand der Schemata der Fig. 2 und 3 erläutert. Die oberste, horizontale Zeile deutet die Geräteteile aus Fig. 1 an. Die senkrechten Linien stellen gewissermaßen Zeitachsen dar. Vorausgesetzt wird, dass unter Benutzung der gespeicherten Parameterwerte ein sicheres Steuerungsprogramm für die Steuerung 4 erstellt worden ist. Alsdann definiert der Anwender mit Hilfe der Parametriereinrichtung die kritischen Zustände FZ₁, FZ₂ ..., welche den sicheren Eingangsteilnehmer bzw. das Feldgerät 1 betreffen. Mit dem Start des Systems liest der sichere Eingangsteilnehmer bzw. das Feldgerät 1 zyklisch die Eingangsdaten Z₀, Z₁ ... Zₓ in den Eingangsspeicher 11 ein. Diese Daten werden zur Steuereinheit 4 übertragen, wie dies durch die eingezeichneten Pfeile zwischen der Spalte 1 der Fig. 2 bzw. 3 und der Spalte 4 dargestellt ist. Mit dem Eintreffen der Datenwerte Z₀ startet die Steuereinheit 4 ein zyklisches Steuerungsprogramm 4Z₀, das durch ein Rechteck entlang der Linie 4 symbolisiert wird.

Im Betriebsschema der Fig. 2 ist die Erfassung der Eingangsdaten zum Bus 3 synchronisiert, wohingegen das Steuerungsprogramm der Steuereinheit 4 asynchron zum Bus 3 ausgeführt wird. Dargestellt ist der Fall, dass das Steuerungsprogramm länger dauert als der zeitliche Abstand zwischen einzelnen Eingangsdaten. Dies bedeutet, dass die Eingangsdaten Z₁, Z₂ und Z₃ unbeachtet bleiben. Mit dem Eintreffen der Eingangsdaten Z₄ wird ein neues Steuerungsprogramm 4Z₄ gestartet. Zeitlich überdeckend treffen Eingangsdaten Z₆ beim Eingangsteilnehmer 1 ein, die einen kritischen Zustand FZ₁ signalisieren. Daraufhin sendet der Eingangsteilnehmer 1 nur noch die kritischen Eingangsdaten FZ₁ an die Steuereinheit 4. Diese ist zunächst noch mit der Verarbeitung der Eingangsdaten Z₄ beschäftigt. Nach der Verarbeitung von Z₄ werden die kritischen Eingangsdaten FZ₁ wirksam und starten einen Verarbeitungszyklus 4FZ₁. Gleichzeitig wird ein Quittungssignal für FZ₁ von der Steuereinheit 4 zum Eingangsteilnehmer 1 rückgesendet, wodurch die Aussendung der kritischen Eingangsdaten FZ₁ beendet wird und mit der Aussendung der aktuell anliegenden Eingangsdaten Z₁₀, Z₁₁, Z₁₂ fortgefahren wird. Mit der Abarbeitung des Programmzyklus 4FZ₁ wird das Verknüpfungsergebnis als Ausgangsdatenwert f(FZ₁) von der Steuereinheit 4 zum Ausgangsfeldgerät 2 übertragen, um dort eine Aktion aufgrund der Ausgangsdaten A₀, A₁, ..., Aₓ einzuleiten.

Fig. 2 stellt nur ein Ausführungsbeispiel dar. Im Beispiel erfolgen die Übertragung der Eingangsdaten Z₀, Z₁ ... Zₓ synchron. Ferner erfolgt die zyklische Abarbeitung der jeweiligen Steuerungsprogramme 4Z₀, 4Z₄ etc. langsamer als die Folge des Eintreffens der einzelnen Eingangsdaten Z₀, Z₁ etc..

Im Betriebsschema der Fig. 3 laufen sowohl die Eingangsverarbeitung beim Feldgerät 1 als auch das Steuerungsprogramm bei der Steuereinheit 4 asynchron zum Übertragungszyklus. Demgemäß wird nach 4Z₀ das Steuerungsprogramm 4Z₁ etc. gestartet, es sei denn, der Eingangsteilnehmer 1 sendet kritische Eingangsdaten FZ₁ aus. Daraufhin wird ein kritischer Verarbeitungszyklus 4FZ₁ durchgeführt, was ein Quittungssignal an den Eingangsteilnehmer 1 und einen Ausgangsdatenwert f(FZ₁) an den Ausgangsteilnehmer 2 zur Folge hat.

Bei der Verwendung bestimmter Bus-Ausbildungen als Übertragungseinrichtung 3 ist es möglich, auf eine explizite Quittung zu verzichten. Bei einer solchen Ausbildung der Übertragungseinrichtung 3 als Bus kann der Eingangsteilnehmer 1 anhand des fortlaufenden Inkrementierens der laufenden Nummer in der übermittelten Nachricht um eine bestimmte Anzahl von Zählschritten exakt bestimmen, ob ein Datensatz für einen kritischen Zustand bei der Steuereinheit angekommen ist. Ferner wird bei diesem Bus die Steuereinheit so betrieben, dass das Steuerungsprogramm immer zwischen zwei Übertragungen ausgeführt wird. Somit ist sichergestellt, dass der kritische Datenwertsatz vom Steuerungsprogramm der Steuereinheit verarbeitet wird.

Mit Fig. 2 ist gezeigt worden, dass die Erfassung der Eingangsdaten des Feldgerätes 1 zum Bus 3 synchronisiert ist. Es ist aber auch möglich, auch das Steuerungsprogramm der Steuereinheit 4 synchron zur Betriebsweise des Bus 3 auszuführen. Gleichermaßen ist es möglich, nur die Steuereinheit 4 zum Bus 3 zu synchronisieren, die Erfassung der Eingangsdaten des Feldgerätes 1 dagegen asynchron zum Bus 3 zu betreiben.

Das Prinzip der Verlängerung der Bereitstellungszeit kritischer Daten kann auch für den Ausgangsteilnehmer 2 angewendet werden. Im Bild der Fig. 2 oder 3 würde dann die Aussendung des Ausgangsdatenwertes f(FZ₁) so lange fortgeführt, bis ein Quittungssignal vom Ausgangsteilnehmer 2 zur Steuereinheit 4 empfangen wird.

Bei gewissen Sicherheits-Bussystemen bedarf es keiner Extra-Maßnahmen für die Verlängerung der Bereitstellungszeit kritischer Daten, weil dort ein sicherer Applikationsbaustein (Funktionsbaustein in der Steuerungs-Software) dafür sorgt, dass eine Rückmeldung vom Anwender zu der Steuereinheit über die Durchführung der Steuerung erfolgt.

Als Übertragungseinrichtung zwischen den Feldgeräten und der Steuereinheit kommen neben Feldbus-Einrichtungen auch Ethernet-Einrichtungen in Betracht.

## Patentansprüche

1. Datenübertragungs- und -verarbeitungssystem, umfassend: mindestens einen Eingangsteilnehmer (1);
eine Steuereinheit (4) zum Empfang und zur Verarbeitung von Daten des Eingangsteilnehmers (1);
eine Übertragungseinrichtung (3) für Daten zwischen dem Eingangsteilnehmer (1) und der Steuereinheit (4);
wobei der Eingangsteilnehmer (1) Eingangsdatenwerte (Z₀, Z₁ ... Zₓ) zyklisch zum Abruf bereitstellt und die Übertragungseinrichtung (3) die Eingangsdatenwerte (Z₀, Z₁ ... Zₓ) zyklisch abruft, welche zur Steuereinheit (4) übertragen werden, um nach Verarbeitung als Ausgangsdaten (A₀, A₁ ... Aₓ) an mindestens einen Ausgangsteilnehmer (2) gesendet zu werden;
**dadurch gekennzeichnet,**
**dass** Parametrierungsmittel (5) mit einer Überwachungsschaltung (12, 15) beim Eingangsteilnehmer (1) vorgesehen sind, um Eingangsdatenwerte, die kritische Zustände kennzeichnen, als kritische Datenwerte (FZ₁) zu markieren, und
**dass** beim Vorliegen solcher kritischer Zustände nur noch die zugehörigen kritischen Datenwerte (FZ₁) zur Übertragung bereit gestellt und so lange übertragen werden, bis sichergestellt ist, dass die Steuereinheit (4) die kritischen Datenwerte (FZ₁) empfangen hat.

2. Datenübertragungs- und -verarbeitungssystem nach Anspruch 1,
**dadurch gekennzeichnet, dass** der Eingangsteilnehmer (1) ein Eingangs-Feldgerät darstellt, das einen Eingangsspeicher (11) zur Bereitstellung der Eingangsdatenwerte (Z₀, Z₁ ... Zₓ) und eine Verarbeitungslogik (12) zum Vergleich der bereitgestellten Daten mit den kritischen Datenwerten (FZ₁) aufweist.

3. Datenübertragungs- und -verarbeitungssystem nach Anspruch 2,
**dadurch gekennzeichnet, dass** das Eingangs-Feldgerät (1) ausgangsseitig eine Slave-Anschaltung (13) aufweist, die über die Übertragungseinrichtung (3) mit einer Master-Anschaltung (41) der Steuereinheit (4) verbunden ist.

4. Datenübertragungs- und -verarbeitungssystem nach Anspruch 3,
**dadurch gekennzeichnet, dass** die Steuereinheit (4) eine Verarbeitungslogik (42) zur Erstellung von Ausgangsdatenwerten (A₀, A₁ ... Aₓ) aufweist, und
dass die Master-Anschaltung (41) zur Aufnahme der übertragenen Datenwerte und Abgabe der AusgangsDatenwerte vorgesehen ist.

5. Datenübertragungs- und -verarbeitungssystem nach einem der Ansprüche 1 bis 4,
**dadurch gekennzeichnet, dass** die Steuereinheit (4) Mittel umfasst, um auf den Empfang von kritischen Datenwerten (FZ₁, FZ₂ ...) hin einen kritischen Ausgangsdatenwert (f(FZ₁)) zu errechnen und wiederholt an den Ausgangsteilnehmer (2) zu senden, bis sichergestellt ist, dass der Ausgangsteilnehmer (2) den kritischen Ausgangsdatenwert (f(FZ₁)) empfangen hat.

6. Datenübertragungs- und -verarbeitungssystem nach Anspruch 5,
**dadurch gekennzeichnet, dass** der Ausgangsteilnehmer (2) Mittel zur Bildung einer Quittung beim Empfang eines kritischen Ausgangsdatenwertes (f(FZ₁)) und Rücksendung der Quittung an die Steuereinheit (4) aufweist.

7. Dätenübertragungs- und -verarbeitungssystem nach einem der Ansprüche 1 bis 6,
**dadurch gekennzeichnet, dass** der Ausgangsteilnehmer (2) ein Ausgangs-Feldgerät darstellt, das eine Verarbeitungslogik (22) aufweist, die die von der Steuereinheit (4) gelieferten Ausgangsdatenwerte (A₀, A₁ ... Aₓ) an einen Ausgangsspeicher (21) vermittelt.

8. Datenübertragungs- und -verarbeitungssystem nach Anspruch 7,
**dadurch gekennzeichnet, dass** das Ausgangs-Feldgerät (2) eingangsseitig eine Slave-Anschaltung (23) aufweist, die über die Übertragungseinrichtung (3) mit der Master-Anschaltung (41) der Steuereinheit (4) verbunden ist.

9. Datenübertragungs- und -verarbeitungssystem nach einem der Ansprüche 1 bis 8,
**dadurch gekennzeichnet, dass** die Übertragungseinrichtung (3) einen Feldbus darstellt.

10. Datenübertragungs- und -verarbeitungssystem nach Anspruch 9,
**dadurch gekennzeichnet, dass** der Feldbus (3) eine zentrale Steuereinheit (4) mit einer Mehrzahl von Feldgeräten verbindet, die als Eingangs-Feldgeräte (1) und als Ausgangs-Feldgeräte (2) oder als kombinierte Feldgeräte ausgebildet sind.

11. Datenübertragungs- und -verarbeitungssystem nach einem der Ansprüche 1 bis 10,
**dadurch gekennzeichnet, dass** die Parametrierungsmittel (5) einen zentralen Speicher (45) für alle Parametrierungsdaten und mindestens einen dezentralen Speicher (15) für spezielle Parametrierungsdaten aufweisen, die für das jeweils zugeordnete Feldgerät zugeschnitten sind.

12. Verfahren zur Sicherung der Datenübertragung und -verarbeitung von kritischen Datenwerten, die vom Eingangsteilnehmer (1) stammen, mit folgenden Schritten:
a) taktmäßiges oder zyklisches Liefern von Eingangsdaten (Z₀, Z₁ ... Zₓ) an einen jeweiligen Eingangsteilnehmer (1) einer Mehrzahl von Eingangsteilnehmern;
b) Speichern der Eingangsdaten (Z₀, Z₁ ... Zₓ) zum taktmäßigen oder zyklischen Abruf; **gekennzeichnet durch** die weiteren Schritte;
c) Vergleichen der Eingangsdaten (Z₀, Z₁ ... Zₓ) mit Parametrierungsdaten zwecks Feststellung von kritischen Datenwerten (FZ₁);
d) falls keine kritischen Datenwerte (FZ1) festgestellt werden, Übertragen der Eingangsdaten (Z₀, Z₁ ... Z₅) an eine Steuereinheit (4);
e) falls kritische Datenwerte (Z₆ = FZ₁) angetroffen werden, Unterbrechen der Speicherung der fortlaufend gelieferten Eingangsdaten und Übertragen der kritischen Datenwerte (FZ₁) an die Steuereinheit (4) so lange, bis sichergestellt ist, dass die Steuereinheit (4) die kritischen Datenwerte empfangen hat.

13. Verfahren nach Anspruch 12,
**dadurch gekennzeichnet, dass** die Steuereinheit (4) bei Empfang von kritischen Datenwerten (FZ₁) ein Quittierungssignal an den Eingangsteilnehmer (4) aussendet, von dem die kritischen Datenwerte stammen.

14. Verfahren nach Anspruch 12,
**dadurch gekennzeichnet, dass** jeder Eingangsteilnehmer (1) zu Übertragungszwecken der Eingangsdaten (Z₀, Z₁. ... Zₓ) an einen Feldbus (3) angeschlossen ist und den Ablauf von vorbestimmten Zählschritten als Empfang der kritischen Datenwerte (FZ₁) bei der Steuereinheit (4) bewertet.

15. Verfahren nach einem der Ansprüche 12 bis 14,
**dadurch gekennzeichnet, dass** die Steuereinheit (4) aus den übertragenen Eingangsdaten (Z₀, Z₁ ... Zₓ) im vorgegebenen Zyklus Ausgangsdaten (A₀, A₁ ... Aₓ) erstellt und über den Feldbus (3) an ein Ausgangs-Feldgerät (2) überträgt.

16. Verfahren nach Anspruch 15,
**dadurch gekennzeichnet, dass** die Steuereinheit (4) bei Empfang von kritischen Datenwerten (FZ₁, FZ₂ ...) einen kritischen Ausgangswert (f(FZ₁)) errechnet und wiederholt an das Ausgangs-Feldgerät (2) sendet, bis sichergestellt ist, dass der Ausgangsteilnehmer (2) den kritischen Ausgangsdatenwert (f(FZ₁)) empfangen hat.

17. Verfahren nach Anspruch 16,
**dadurch gekennzeichnet, dass** das Ausgangs-Feldgerät (2) beim Empfang eines kritischen Ausgangsdatenwertes (f(FZ₁)) ein Quittungssignal an die Steuereinheit (4) rücksendet.

18. Verfahren nach einem der Ansprüche 12 is 17
**dadurch gekennzeichnet, dass** die Eingangsdaten (Z₀, Z₁ ... Zₓ) bei Eingangs-Feldgeräten (1) gewonnene Messdaten darstellen.

19. Verfahren nach einem der Ansprüche 15 bis 18,
**dadurch gekennzeichnet, dass** die Ausgangsdaten (A₀, A₁ ... Aₓ) Aktordaten für Ausgangs-Feldgeräte (2) darstellen.

## Claims

1. Data transmission and processing system, comprising:
at least one input user (1);
a control unit (4) for receiving and for processing data of the input user (1);
a transmission device (3) for data between the input user (1) and the control unit (4); wherein the input user (1) cyclically provides input data values (Z₀, Z₁ ... Zₓ) for retrieval and the transmission device (3) cyclically retrieves the input data values (Z₀, Z₁ ... Zₓ) which are transmitted to the control unit (4), in order after processing to be transmitted as output data (A₀, A₁ ... Aₓ) to at least one output user (2);
**characterised in that**
parameterising means (5) having at monitoring circuit (12, 15) are provided at the input user (1) in order to mark input data values, which denote critical states, as critical data values (FZ₁), and
in the presence of such critical states only the associated critical data values (FZ₁) are provided for transmission and are transmitted until it is ensured that the control unit (4) has received the critical data values (FZ₁).

2. Data transmission and processing system as claimed in claim 1,
**characterised in that** the input user (1) is an input field device which comprises an input memory (11) to provide the input data values (Z₀, Z₁ ... Zₓ) and a processing logic (12) to compare the provided data with the critical data values (FZ₁).

3. Data transmission and processing system as claimed in claim 2,
**characterised in that** the input field device (1) comprises on the output-side a slave connection (13) which is connected to a master connection (41) of the control unit (4) via the transmission device (3).

4. Data transmission and processing system as claimed in claim 3,
**characterised in that** the control unit (4) comprises a processing logic (42) to produce output data values (A₀, A₁ ... Aₓ) and the master connection (41) is provided to receive the transmitted data values and to output the output data values.

5. Data transmission and processing system as claimed in any one of claims 1 to 4,
**characterised in that** the control unit (4) comprises means in order to calculate a critical output data value (f (FZ₁)) in response to the reception of critical data values (FZ₁, FZ₂ ...) and to transmit it repeatedly to the output user (2) until it is ensured that the output user (2) has received the critical output data value (f (FZ₁)).

6. Data transmission and processing system as claimed in claim 5,
**characterised in that** the output user (2) comprises means for establishing an acknowledgement during reception of a critical output data value (f (FZ₁)) and for transmitting the acknowledgement back to the control unit (4).

7. Data transmission and processing system as claimed in any one of claims 1 to 6,
**characterised in that** the output user (2) is an output field device which comprises a processing logic (22) which communicates the output data values (A₀, A₁ ... A_{X}), which are delivered by the control unit (4), to an output memory (21).

8. Data transmission and processing system as claimed in claim 7,
**characterised in that** the output field device (2) comprises on the input-side a slave connection (23) which is connected to the master connection (41) of the control unit (4) via the transmission device (3).

9. Data transmission and processing system as claimed in any one of claims 1 to 8,
**characterised in that** the transmission device (3) is a field bus.

10. Data transmission and processing system as claimed in claim 9,
**characterised in that** the field bus (3) connects a central control unit (4) to a plurality of field devices which are formed as input field devices (1) and as output field devices (2) or as combined field devices.

11. Data transmission and processing system as claimed in any one of claims 1 to 10,
**characterised in that** the parameterising means (5) comprise a central memory (45) for all parameterisation data and at least one decentral memory (15) for specific parameterisation data which are tailored to suit the respectively allocated field device.

12. Method of ensuring data transmission and processing of critical data values which originate from the input user (1), including the steps of:
a) timed or cyclical delivery of input data (Z₀, Z₁ ... Z_{X}) to a respective input user (1) of a plurality of input users;
b) storing the input data (Z₀, Z₁ ... Z_{X}) for timed or cyclical retrieval; **characterised by** the further steps of:
c) comparing the input data (Z₀, Z₁ ... Z_{X}) to parameterisation data for the purpose of establishing critical data values (FZ₁);
d) if no critical data values (FZ1) are established, transmitting the input data (Z₀, Z₁ ... Z₅) to a control unit (4);
e) if critical data values (Z₆ = FZ₁) are encountered, interrupting the storage of the continuously delivered input data and transmitting the critical data values (FZ) to the control unit (4) until it is ensured that the control unit (4) has received the critical data values.

13. Method as claimed in claim 12,
**characterised in that** during reception of critical data values (FZ₁) the control unit (4) transmits an acknowledgement signal to the input user (4), from which the critical data values originate.

14. Method as claimed in claim 12,
**characterised in that** each input user (1) is connected to a field bus (3) for the purposes of transmitting the input data (Z₀, Z₁ ... Z_{X}) and evaluates the sequence of predetermined counting steps as the reception of the critical data values (FZ₁) in the control unit (4).

15. Method as claimed in any one of claims 12 to 14, **characterised in that** the control unit (4) uses the transmitted input data (Z_{0,} Z₁ ... Z_{X}) in the specified cycle to produce output data (A₀, A₁ ... A_{X}) and transmits same via the field bus (3) to an output field device (2).

16. Method as claimed in claim 15,
**characterised in that** during reception of critical data values (FZ₁, FZ₂ ...) the control unit (4) calculates a critical output value (f (FZ₁)) and transmits it repeatedly to the output field device (2) until it is ensured that the output user (2) has received the critical output data value (f (FZ₁)).

17. Method as claimed in claim 16,
**characterised in that** during reception of a critical output data value (f (FZ₁)) the output field device (2) transmits an acknowledgement signal back to the control unit (4).

18. Method as claimed in any one of claims 12 to 17,
**characterised in that** the input data (Z₀, Z₁... Z_{X}) represent measurement data acquired in input field devices (1).

19. Method as claimed in any one of claims 15 to 18, **characterised in that** the output data (A₀, A₁ ... A_{X}) represent actuator data for output field devices (2).

## Revendications

1. Système de transmission et de traitement de données, comprenant :
au moins un participant d'entrée (1) ;
une unité de commande (4) destinée à recevoir et traiter des données du participant d'entrée (1) ;
un dispositif de transmission (3) de données entre le participant d'entrée (1) et l'unité de commande (4) ;
dans lequel le participant d'entrée (1) fournit cycliquement des valeurs de données d'entrée (Z₀, Z₁, ..., Zₓ) afin qu'elles soient interrogées et le dispositif de transmission (3) interroge cycliquement les valeurs de données d'entrée (Z₀, Z₁, ... , Zₓ) , qui sont transmises à l'unité de commande (4) afin d'être envoyées à au moins un participant de sortie (2) comme valeurs de données de sortie (A₀, A₁, ..., Aₓ) , après leur traitement ;
**caractérisé en ce qu'**il est prévu au niveau du participant d'entrée (1) des moyens de paramétrage (5) avec un circuit de surveillance (12, 15) afin de marquer comme valeurs de données critiques (FZ₁) des valeurs de données d'entrée qui caractérisent des états critiques ; et
**en ce que**, en présence de tels états critiques, seules les valeurs de données critiques (FZ₁) correspondantes sont fournies pour la transmission et sont transmises assez longtemps pour qu'il soit assuré que l'unité de commande (4) a reçu les valeurs de données critiques (FZ₁).

2. Système de transmission et de traitement de données selon la revendication 1,
**caractérisé en ce que** le participant d'entrée (1) constitue un appareil de terrain d'entrée qui possède une mémoire d'entrée (11) destinée à fournir les valeurs de données d'entrée (Z₀, Z₁, ..., Zₓ) et une logique de traitement (12) destinée à comparer les données fournies avec les valeurs de données critiques (FZ₁).

3. Système de transmission et de traitement de données selon la revendication 2,
**caractérisé en ce que** l'appareil de terrain d'entrée (1) possède sur le côté sortie un circuit esclave (13) qui est relié via le dispositif de transmission (3) à un circuit maître (41) de l'unité de commande (4).

4. Système de transmission et de traitement de données selon la revendication 3,
**caractérisé en ce que** l'unité de commande (4) possède une logique de traitement (42) destinée à la production des valeurs de données de sortie (A₀, A₁, ..., Aₓ), et **en ce que** le circuit maître (41) est prévu pour recevoir les valeurs de données transmises et pour fournir les valeurs de données de sortie.

5. Système de transmission et de traitement de données selon l'une des revendications 1 à 4,
**caractérisé en ce que** l'unité de commande (4) comprend un moyen qui, après réception de valeurs de données critiques (FZ₁), est destiné à calculer une valeur de donnée critique de sortie (f(FZ₁)) et à l'envoyer répétitivement au participant de sortie (2) jusqu'à ce qu'il soit assuré que le participant de sortie (2) a reçu la valeur de donnée critique de sortie (f(FZ₁)).

6. Système de transmission et de traitement de données selon la revendication 5,
**caractérisé en ce que** le participant de sortie (2) possède un moyen destiné à former un accusé de réception lors de la réception d'une valeur de donnée critique de sortie (f(FZ₁)) et à renvoyer l'accusé de réception à l'unité de commande (4).

7. Système de transmission et de traitement de données selon l'une des revendications 1 à 6,
**caractérisé en ce que** le participant de sortie (2) constitue un appareil de terrain de sortie qui possède une logique de traitement (22) qui transmet les valeurs de données de sortie (A₀, A₁, ..., Aₓ) fournies par l'unité de commande (4) à une mémoire de sortie (21).

8. Système de transmission et de traitement de données selon la revendication 7,
**caractérisé en ce que** l'appareil de terrain de sortie (2) possède sur le côté entrée un circuit esclave (23) qui est relié via le dispositif de transmission (3) au circuit maître (41) de l'unité de commande (4).

9. Système de transmission et de traitement de données selon l'une des revendications 1 à 8,
**caractérisé en ce que** le dispositif de transmission (3) constitue un bus de terrain.

10. Système de transmission et de traitement de données selon la revendication 9,
**caractérisé en ce que** le bus de terrain (3) relie une unité centrale de commande (4) à une pluralité d'appareils de terrain qui sont configurés comme appareils d'entrée de terrain (1), appareils de terrain de sortie (2) ou appareils de terrain combinés.

11. Système de transmission et de traitement de données selon l'une des revendications 1 à 10,
**caractérisé en ce que** les moyens de paramétrage (5) possèdent une mémoire centrale (45) pour toutes les données de paramétrage et au moins une mémoire décentralisée (15) pour des données de paramétrage spéciales qui sont adaptées à l'appareil de terrain correspondant.

12. Procédé de sécurisation de la transmission et du traitement de valeurs de données critiques qui proviennent du participant d'entrée (1), comprenant les étapes suivantes :
a) livraison cadencée ou cyclique de valeurs de données d'entrée (Z₀, Z₁, ..., Zₓ) à un participant d'entrée (1) considéré parmi une pluralité de participants d'entrée ;
b) mémorisation des valeurs de données d'entrée (Z₀, Z₁, ..., Zₓ) en vue de leur interrogation cadencée ou cyclique ;
**caractérisé par** les étapes suivante
c) comparaison des valeurs de données d'entrée (Z₀, Z₁, ..., Zₓ) avec des données de paramétrage afin de constater des valeurs de données critiques (FZ₁) ;
d) s'il n'est pas constaté de valeurs de données critiques (FZ₁), transmission des valeurs de données d'entrée (Z₀, Z₁, ..., Zₓ) vers une unité de commande (4) ; ;
e) si des valeurs de données critiques (FZ₁) sont rencontrées, interruption de la mémorisation des valeurs de données d'entrée fournies en continu et transmission des valeurs de données critiques (FZ₁) à l'unité de commande (4) assez longtemps pour qu'il soit assuré que l'unité de commande (4) a reçu les valeurs de données critiques (FZ₁).

13. Procédé selon la revendication 12,
**caractérisé en ce que** l'unité de commande (4), après réception de valeurs de données critiques (FZ₁), envoie un signal d'accusé de réception au participant d'entrée (1) dont proviennent les valeurs de données critiques.

14. Procédé selon la revendication 12,
**caractérisé en ce que** chaque participant d'entrée (1) est raccordé à un bus de terrain (3) aux fins de transmettre les valeurs de données d'entrée (Z₀, Z₁, ..., Zₓ) et analyse le déroulement d'opérations prédéterminées de comptage comme la réception des valeurs de données critiques (FZ₁) par l'unité de commande (4).

15. Procédé selon l'une des revendications 12 à 14, **caractérisé en ce que** l'unité de commande (4) produit à partir des valeurs de données d'entrée (Z₀, Z₁, ... , Zₓ) transmises, selon un cycle prédéterminé, des valeurs de données de sortie (A₀, A₁, ..., Aₓ) et les transmet via le bus de terrain (3) à un appareil de terrain de sortie (2).

16. Procédé selon la revendication 15,
**caractérisé en ce que** l'unité de commande (4), après réception de valeurs de données critiques (FZ₁, FZ₂, ...), calcule une valeur de donnée critique de sortie (f(FZ₁)) et l'émet répétitivement vers l'appareil de terrain de sortie (2) jusqu'à ce qu'il soit assuré que le participant de sortie (2) a reçu la valeur de donnée critique de sortie (f(FZ₁)).

17. Procédé selon la revendication 16,
**caractérisé en ce que** l'appareil de terrain de sortie (2), après réception d'une valeur de donnée critique de sortie (f(FZ₁)), renvoie un signal d'accusé de réception à l'unité de commande (4).

18. Procédé selon l'une des revendications 12 à 17,
**caractérisé en ce que** les valeurs de données d'entrée (Z₀, Z₁, ..., Zₓ) constituent des valeurs de mesure obtenues par les appareils de terrain d'entrée (1).

19. Procédé selon l'une des revendications 15 à 18,
**caractérisé en ce que** les valeurs de données de sortie (A₀, A₁, ..., Aₓ) constituent des données d'actionnement pour des appareils de terrain de sortie (2).
